# EUROPEAN PATENT SPECIFICATION

(11) **EP 3 538 408 B1**
(45) Date of publication and mention of the grant of the patent: **04.11.2020**
(21) Application number: 17787919.4
(22) Date of filing: 24.10.2017
(51) Int. Cl.: B60T 17/22

(54) **BRAKING SYSTEM AND CONTROL METHOD**
BREMSSYSTEM UND REGELUNGSMETHODE
SYSTEME DE FREIN ET METHODE D'ACTIONNEMENT

(30) Priority: 09.11.2016 RU 2016144074
(43) Date of publication of application: 18.09.2019
(73) Proprietor: Arrival Limited, Banbury, Oxfordshire OX16 2DJ (GB)
(72) Inventor: LARIN, Aleksey, Moscow 127254 (RU)
(74) Representative: Korenberg, Alexander Tal
(86) International application number: PCT/EP2017/077109
(87) International publication number: WO 2018/086869

(56) References cited:
- EP-A1- 3 069 946
- DE-A1-102013 217 210
- DE-B3-102008 006 264
- FR-A1- 2 244 205
- JP-A- 2009 190 616
- US-A1- 2003 066 714
- US-A1- 2015 224 969

## Description

### Field

The present invention relates to a braking system and a control method of a braking system. More particularly, the present invention relates to braking systems for vehicles which have a vehicle brake and a parking mechanism operable to put the vehicle in a parking mode.

### Background

Vehicles typically comprise multiple braking mechanisms for applying braking force to the vehicle. For example, a vehicle may comprise a parking brake such as a handbrake, which can be activated to resist movement of the vehicle while stationary, and may further comprise a vehicle brake which is operable to apply a braking force while the vehicle is travelling, thereby slowing the vehicle. In vehicles which comprise parking brakes, it is known to display an indication that a parking brake is applied, for example by displaying the symbol "P" in an instrument cluster above the steering wheel. However, this indication is usually displayed on a relatively small part of the instrument cluster and so may not be noticed by the driver.

The invention is made in this context.

US2015/224969A1 describes an electronic parking brake system having selectable modes and varying parking brake actuation dependent on the selected mode and amount of parking brake application being requested.

DE102013217210A1 describes a method for assisting a driver of a motor vehicle during a start-up procedure on a slope, wherein the motor vehicle has a mechanically actuated parking brake with a lever for operation by the driver, with the steps of: (i) determining a downhill torque, (ii) determining a momentary drive torque of an engine of the motor vehicle, and (iii) outputting a signal when the instantaneous drive torque exceeds the downhill torque.

EP3069946A1 describes a control circuit for an electronically controlled parking brake for a commercial vehicle. The parking brake can be permanently locked to secure a standing vehicle, or temporarily applied to decelerate the vehicle. US2003/0066714A1 describes a parking brake assembly including an electric motor having an output shaft, a control module coupled to the motor for controlling the motor and a transmission coupling a threaded lead screw to the output shaft of the motor.

### Summary

According to a first aspect of the present invention, there is provided a braking system for vehicle, according to claim 1.

The feedback apparatus may be configured to change a resistance to movement of the control mechanism. The feedback apparatus may be configured to control a haptic feedback unit coupled to the control mechanism to cause the control mechanism to vibrate.

The braking system comprises:
a parking apparatus operable to select a parking mode of the vehicle,
wherein the parking apparatus comprises a user input apparatus for receiving a user input.

The control mechanism may comprise a movable hand or foot operated member. The control mechanism may comprise an actuator configured to move the moveable member. The control mechanism may comprise a brake pedal. The control mechanism may be configured to move the brake pedal downwards in response to the parking mode of the vehicle being selected. This may advantageously provide a user-benefit of feeling the braking function is being taken away from the driver and is entrusted with the vehicle control, providing reassurance that it is safe to leave the vehicle as a parking mode is engaged, and the vehicle will not move if the drive releases the control mechanism, for example, if the drive takes their foot off the brake pedal. This user-benefit may also be provided should the control mechanism may be configured to move the brake pedal upwards in response to the parking mode of the vehicle being selected.

The user-detectable effect may comprise providing a tactile input to the control mechanism. Providing the user-detectable effect may comprise adjusting a tactile response of the control mechanism.

The parking apparatus may comprise a touch-screen. The parking apparatus may comprises a controller configured to control the touch screen to display a GUI indicative of a parking mode selection option. The parking apparatus may comprise means to engage a drivetrain of the vehicle to prevent movement of the vehicle, in response to selection of the parking mode.

According to a second aspect of the present invention, there is provided a method of controlling a braking system according to claim 12.

Providing a user-detectable effect may comprise changing a resistance to movement of the control mechanism.

The user-detectable effect may comprise a vibration of the control mechanism.

Determining whether the vehicle is in the parking mode may comprise determining whether a parking brake is engaged. The parking brake may comprise a brake operable upon the vehicle wheels, and/or may comprise a brake applied upon the vehicle drivetrain, such as upon the transmission.

According to a third aspect of the present invention comprises a computer-readable storage medium arranged to store computer program instructions which, when executed, perform the method according to the second aspect.

All features described herein (including any accompanying claims, abstract and drawings), and/or all of the steps of any method or process so disclosed, may be combined with any of the above aspects in any combination, except combinations where at least some of such features and/or steps are mutually exclusive.

### Brief Description of the Figures

Embodiments of the present invention will now be described, by way of example only, with reference to the accompanying drawings, in which:
Figure 1 is a schematic diagram of a user control according to an embodiment of the present invention;
Figures 2a and 2b are flow diagrams illustrating methods of controlling the user control shown in Figure 1 according to aspects of the present invention;
Figure 3 is a schematic diagram of a user control according to another embodiment of the present invention;
Figure 4 is a flow diagram illustrating a method of controlling the user control shown in

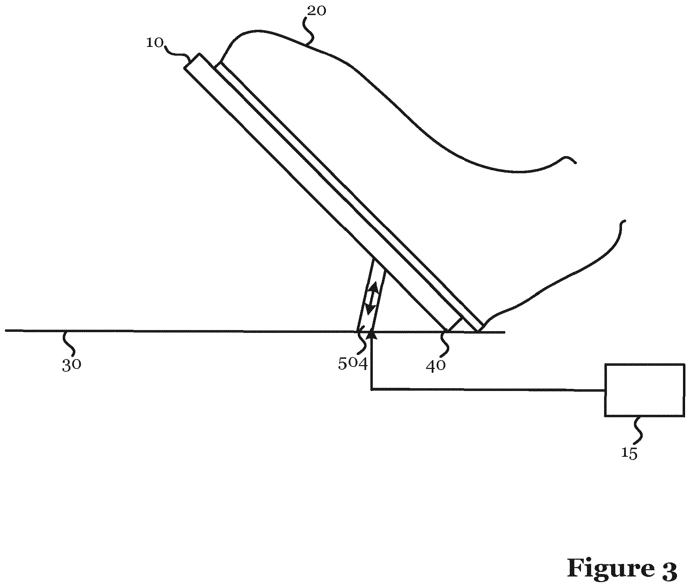

Figure 3 according to an aspect of the present invention;

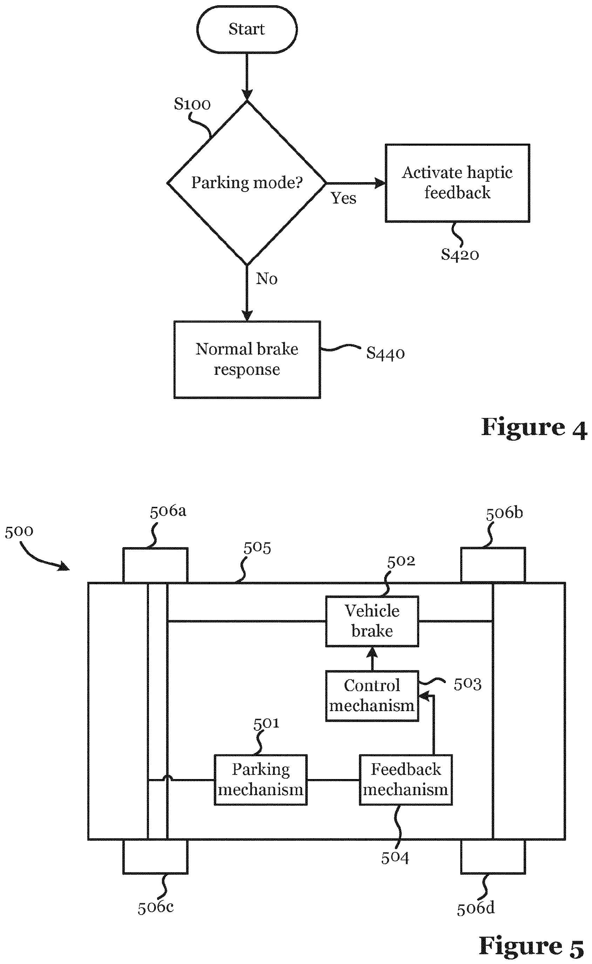

Figure 5 is a system diagram illustrating a braking system for a vehicle comprising a vehicle brake and a parking mechanism operable to put the vehicle in a parking mode, according to an embodiment of the present invention; and

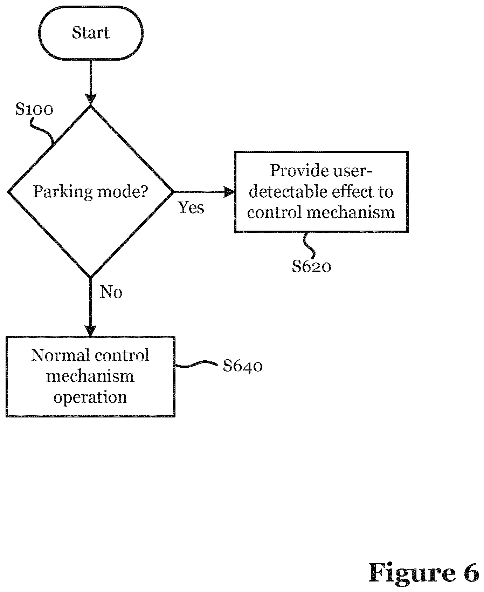

Figure 6 is a flow diagram illustrating a method of controlling the braking system shown in Figure 5.

### Detailed Description

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

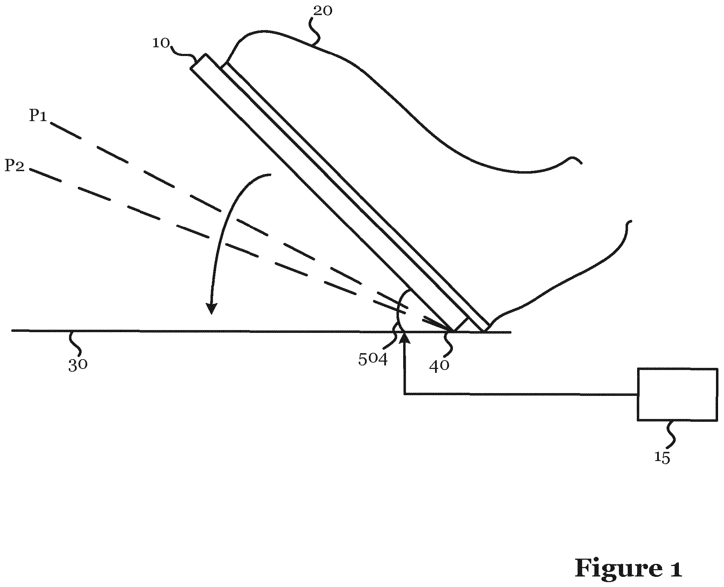

Figure 1 shows a means for slowing a moving vehicle. Typically, vehicles, such as cars, trucks and vans, are slowed using a vehicle brake operating on all wheels of the vehicle. The vehicles are put into a parking mode using a parking mechanism such as a handbrake or parking gear operating on the drivetrain, transmission or rear wheels. The vehicle brake is controlled with a user control. In the example shown in Figure 1, the user control mechanism is a brake pedal 10. The brake pedal 10 usually takes the form of a foot pedal, as shown in Figure 1. In some vehicles, such as vehicles for disabled drivers, the brake pedal 10 is hand-operated. For example, the hand-operated brake pedal is mechanically linked to a foot pedal. In alternative embodiments, the user control mechanism is a joystick, wheel, or touch screen interface.

As shown in Figure 1, the brake pedal 10 is coupled to the floor 30 of the inside of the vehicle by a hinge 40. In other embodiments, the brake pedal 10 extends from the upper surface of a footwall within the vehicle. In further embodiments, the brake pedal 10 is coupled to a steering wheel.

The brake pedal 10 is further coupled to the floor of the vehicle by a feedback mechanism 504. In the embodiment shown in Figure 1, the feedback mechanism 504 comprises a biasing means. In some embodiments, the biasing means is integrated with the hinge 40. The biasing means supports the brake pedal 10 such that the brake pedal 10 remains in an elevated position unless force is applied to the brake pedal 10. In some embodiments, the biasing means comprises a mechanical spring, such as a coil spring coupled to the hinge 40. In other embodiments, the biasing means comprises a hydraulic system in which pressure of the liquid in the system can be varied. The resilience (or resistance) of the biasing means is controlled by a controller 15. The biasing means is controlled, for example, by the spring being tightened, or fluid pressure being increased.

The vehicle has two main modes of operation. In a drive mode, the vehicle is able to move forwards and/or backwards. In the drive mode, a drive gear, such as Drive, Sport, and Reverse is engaged. In a parking mode, the vehicle is not configured to move. In the parking mode, a handbrake or a parking gear is engaged.

When the vehicle is in drive mode, the biasing means is controlled by the controller 15 to have a first resilience. In other words, in the drive mode, the biasing means allows the brake pedal 10 to be depressed as far as point Pi when the maximum pressure is applied to the brake pedal 10 by the user 20.

When the vehicle is in park mode, the biasing means is controlled by the controller 15 to have a second resilience. In other words, in the parking mode, the biasing means allows the brake pedal 10 to be depressed as far as point P2 when the maximum pressure is applied to the brake pedal 10 by the user 20. Therefore, when the user 20 is fully applying the brake, they will feel an immediate drop in the brake pedal 10 when the vehicle mode is transitioned from the drive mode to the parking mode.

Here, point P2 is closer to the vehicle floor 30 than point Pi. It would be readily appreciated that in alternative embodiments, point Pi could be arranged closer to the vehicle floor 30 than point P2. In other words, the user 20 feels the brake pedal 10 rise when the vehicle transitions from drive mode to parking mode.

In the embodiment shown in Figure 1, the hinge 40 is configured to cause the brake pedal 10 to rise or fall further on maximum depression depending on the vehicle mode. According to other embodiments, the controller 15 controls the biasing means to have relatively reduced resilience in parking mode such that more pressure on the brake pedal 10 is necessary to move the brake pedal 10 from point Pi to point P2, in contrast with the driving mode where less pressure is required to move the brake pedal from point Pi to point P2. It would be appreciated by the skilled person that in alternative embodiments the controller 15 is configured to adjust the biasing means such that more pressure is required to move the brake pedal from point Pi to point P2 in the driving mode, and vice versa.

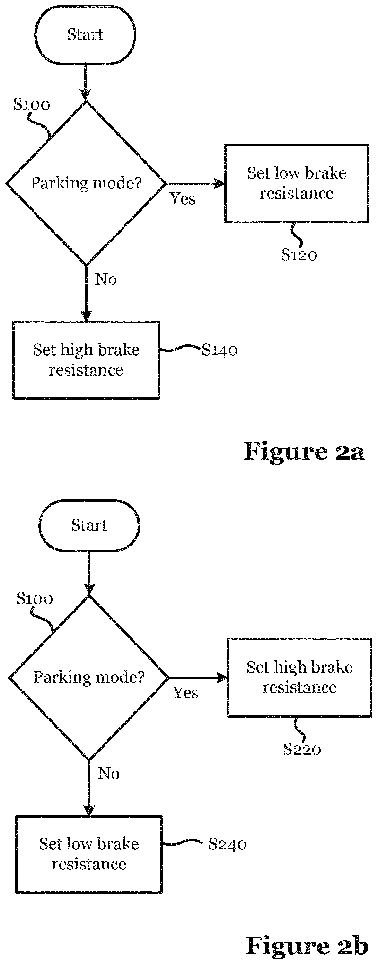

Figure 2a shows a method of controlling a braking system according to an embodiment. In a first step, S100, the controller 15 detects whether a parking mode is engaged. The parking mode is, for example, where a parking brake and/or parking gear and/or hand brake is engaged. If the vehicle is detected to be in parking mode, the controller 15 controls the biasing means to have low resistance such that the brake pedal 10 has low resistance in step S120.

If the controller 15 detects that the vehicle is not in parking mode, for example instead the vehicle is operating in drive mode or neutral, in step S100, the controller 15 controls the biasing means to have a high resistance such that the brake pedal has a high resistance in step S140. The resistance of the brake pedal 10 in parking mode is relative to the resistance of the brake pedal 10 when the vehicle is not in parking mode.

In other words, the controller 15 adjusts the tactile response of the brake pedal 10. This provides non-visual feedback through a part of the vehicle body that will necessarily be in physical contact with the user.

Figure 2b shows method of controlling a braking system according to another embodiment. Step S100 is the same as that in Figure 2a. Here, the controller 15 sets a high brake pedal resistance in step S220 if the parking mode is activated. In step S220, the controller 15 sets a low brake pedal 10 resistance, relative to the case where the vehicle is in parking mode, if the vehicle is not in parking mode.

Figure 3 illustrates a braking system according to another embodiment. The system is similar to that described with reference to Figure 1, and description of similar features will not be repeated.

In contrast with the embodiments described with reference to Figure 1, the feedback mechanism 504 comprises a piston coupled to the brake pedal 10. The piston is actuated to retract the brake pedal 10 without pressure being applied to the brake pedal 10 by the user 20. The piston is actuated by the controller 15 when the vehicle is determined to be in parking mode. In other embodiments, the brake pedal 10 is coupled to an electric motor for retracting, or drawing down, the brake pedal 10.

In some embodiments, the feedback mechanism 504 comprises a haptic feedback means coupled to the floor 30 of the vehicle. Here, the haptic feedback means comprises a piston for causing the brake pedal 10 to move up and down relative to the floor 30 of the vehicle. The haptic feedback means is controlled by the controller 15. The haptic feedback means causes the brake pedal 10 to vibrate.

In alternative embodiments, the haptic feedback means is disposed in the brake pedal 10. In still further embodiments, the haptic feedback means is coupled to the hinge 40. Alternatively again, the haptic feedback means is coupled to the biasing means described with reference to Figure 1.

Where the user control is a touch screen or joystick, for example, the haptic feedback means is integrated with the user control, or disposed below the user control, such that the user detects tactile feedback when touching the user control.

A method of controlling the braking system shown in Figure 3 will now be described with reference to Figure 4. Here, step S100 is the same as that described with reference to Figures 2a and 2b.

If the vehicle is detected to be in parking mode in step S100, the controller 15 activates the haptic feedback means in step S420. The haptic feedback means causes a tactile response to be generated by the brake pedal 10, which can be sensed by the user 20. The haptic feedback means may cause the brake pedal 10 to vibrate.

If the vehicle is detected not to be in parking mode in step S100, i.e. the vehicle is in one of drive or neutral modes, the controller 15 deactivates the haptic feedback means. In other words, in drive or neutral mode, the brake pedal 10 elicits a normal response.

Figure 5 shows a braking system 500 according to aspects of the present invention. The braking system 500 is disposed in a vehicle 505 having a set of wheels 506a-d. In the present embodiment, the vehicle 505 comprises a vehicle brake 502 which is operable to apply a braking force to all of the wheels 506a, 506b, 506c, 506d of the vehicle 505. In other embodiments, the vehicle brake 502 may only apply a braking force to some, but not all, of the wheels. The vehicle brake 502 is operated to slow the vehicle 505 when the vehicle 505 is in driving mode, that is, while the vehicle is travelling. It is normal to apply the vehicle brake 502 when it is desired to bring the vehicle 505 to a stop.

The vehicle brake 502 is operated by a user control mechanism 503. For example, the control mechanism 503 can be a brake pedal as previously described. Alternatively, the control mechanism 503 may be embodied differently, for example as a joystick, wheel or touch screen.

The braking system 500 further includes a parking mechanism 501, such as a hand brake or drivetrain brake (e.g. a parking gear operable via the transmission to prevent a vehicle moving from a stationary parked state). The parking mechanism 501 is controlled by a different user action to the control mechanism 503. The parking mechanism 501 is actuated by, for example, a touch screen or electrical switch.
The parking mechanism 501 in the example shown in Figure 5 is coupled only to the rear wheels 506a, 506c of the vehicle 505. The parking mechanism 501 locks the rear wheels 506a, 506c. In other embodiments the parking mechanism may act on a different subset of the wheels 506a, 506b, 506c, 506d, for example the parking mechanism 501 may act only on the front wheels 506b, 506d. In another embodiment the parking mechanism 501 may act on all of the wheels of the vehicle 505.

The parking mechanism 501 and control mechanism 503 are coupled to a feedback mechanism 504. The feedback mechanism 504 adjusts the tactile response of the user control mechanism 503 according to whether the parking mechanism 501 is engaged. The feedback mechanism 504 is, for example, a haptic feedback device. In further embodiments, the feedback mechanism 504 is an adjustable piston or damper. In further embodiments still, the feedback mechanism 504 increases or decreases pressure of hydraulic fluid biasing the control mechanism 503.

Figure 6 shows a general method that can be used to control a vehicle 505, specifically its braking system 500. The method comprises determining, in a first step S100, whether the vehicle 505 is operating in a parking mode. For example, the controller 15 determines whether the parking mechanism 501 is engaged. This may be achieved by receiving a signal from the parking mechanism 501. Alternatively, the controller 15 may receive a signal from a user input for controlling the parking mechanism 501 indicating that the user has selected to engage the parking mechanism 501.

If the parking mechanism 501 is engaged, in step S620 the feedback mechanism 504 is controlled to provide a user-detectable effect to the control mechanism 503. As explained with reference to Figures 1 to 4, this may include causing the control mechanism 503 to vibrate, retract, or have a changed resistance to movement (i.e. a changed tactile response).

If the parking mechanism 501 is not engaged, the feedback mechanism 504 is not controlled to provide a user-detectable effect to the control mechanism 503.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer.

A computer-readable medium may comprise a computer-readable storage medium that may be any tangible media or means that can contain or store the instructions for use by or in connection with an instruction execution system, apparatus, or device, such as a computer as defined previously.

According to various embodiments of the previous aspect of the present invention, the computer program according to any of the above aspects, may be implemented in a computer program product comprising a tangible computer-readable medium bearing computer program code embodied therein which can be used with a processor for the implementation of the functions described above.

Reference to "computer-readable storage medium", "computer program product", "tangibly embodied computer program" etc., or a "processor" or "processing circuit" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

By way of example, and not limitation, such "computer-readable storage medium" may mean a non-transitory computer-readable storage medium which may comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. An exemplary non-transitory computer-readable storage medium is an optical storage disk such as a CD. Also, any connection is properly termed a "computer-readable medium". For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that "computer-readable storage medium" and data storage media do not include connections, carrier waves, signals, or other transient media, but are instead directed to non-transient, tangible storage media. Disk and disc, as used herein, include compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of "computer-readable medium".

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

If desired, the different steps discussed herein may be performed in a different order and/or concurrently with each other. Furthermore, if desired, one or more of the above-described steps may be optional or may be combined.

By providing a user-detectable effect (or, in other words, by adjusting a tactile response) of the control mechanism 503 for the vehicle brake 502, in this way the driver is provided with tactile, non-visual feedback to indicate when the parking mechanism 501 is activated. A further benefit arises when the tactile feedback is provided via the control mechanism 503 which operates the vehicle brake 502, since the driver's body will be in contact with this part of the vehicle 505 in a situation when the parking mechanism 501 should be activated, specifically when the vehicle 505 is stationary. The driver can therefore tell whether the parking mechanism 501 has been activated without having to divert their gaze from the road, reducing the risk of an accident. Furthermore, development of new, innovative vehicles has seen more sophisticated electronic controls provided to operate the vehicle, such as push buttons or graphical user interfaces on touch-sensitive screens. This results in the omission of more physical tactile mechanical control devices such as hand brake levers which traditionally have provided user-assurance of control actuation (e.g. parking brake engagement). The present invention provides reassurance to a driver than a parking mode has been selected and is engaged, for such modern vehicles with electronic controls, and helps reassure the drive that the vehicle will not move once the control mechanism (e.g. brake pedal) is released. For example, if a vehicle was to have a parking mode selectable only by the touch of a button without tactile or other user-detectable feedback, this may leave the driver unsure as to whether the parking mode of the vehicle has been engaged. Providing the tactile or other user-detectable feedback on the control mechanism (e.g. brake pedal) that a driver uses to stop the vehicle also helps prevent a driver inadvertently leaving a vehicle without engaging a parking mode.

Whilst certain embodiments of the invention have been described herein with reference to the drawings, it will be understood that many variations and modifications will be possible without departing from the scope of the invention as defined in the accompanying claims.

## Claims

1. A braking system (500) for a vehicle, the braking system comprising:
a first control mechanism (503) operable by a user to control a vehicle brake (502);
a second mechanism (501) operable by a user to select a parking mode of the vehicle; and
a feedback apparatus (504) configured to provide a user-detectable effect to the first mechanism in response to the parking mode of the vehicle being selected via the second mechanism.

2. The braking system according to claim 1, wherein the feedback apparatus is configured to change a resistance to movement of the first mechanism.

3. The braking system according to claim 1 or 2, wherein the feedback apparatus is configured to control a haptic feedback unit coupled to the first mechanism to cause the first mechanism to vibrate.

4. The braking system according to claim 1 or 2, wherein the second mechanism comprises a user input apparatus for receiving a user input.

5. The braking system according to claim 1, wherein the first mechanism comprises a movable hand or foot operated member.

6. The braking system according to claim 5, wherein the first mechanism comprises an actuator configured to move the moveable member.

7. The braking system according to claim 5 or claim 6, wherein the first mechanism comprises a brake pedal (10).

8. The braking system according to claim 7, wherein the first mechanism is configured to move the brake pedal downwards in response to the parking mode of the vehicle being selected.

9. The braking system according to claim 1 or 2, wherein providing the user-detectable effect comprises providing a tactile input to the first mechanism,
optionally wherein providing the user-detectable effect comprises adjusting a tactile response of the first mechanism.

10. The braking system according to claim 1 or 2, wherein the second mechanism comprises a touch-screen.

11. The braking system according to claim 10, wherein the second mechanism comprises a controller configured to control the touch screen to display a GUI indicative of a parking mode selection option,
optionally wherein the second mechanism comprises means to engage a drivetrain of the vehicle to prevent movement of the vehicle, in response to selection of the parking mode.

12. A method of controlling a braking system (500) for a vehicle, the method comprising:
determining (S100) whether a parking mode of the vehicle has been selected via a second mechanism (501); and
providing (S620) a user-detectable effect to a first control mechanism (503) operable by a user to control a brake (502) of the vehicle in response to determining that the parking mode of the vehicle has been selected via the second mechanism.

13. The method according to claim 12, wherein providing a user-detectable effect comprises changing (S120, S220) a resistance to movement of the first mechanism, or wherein the user-detectable effect comprises a vibration of the first mechanism.

14. A computer-readable storage medium arranged to store computer program instructions which, when executed by an instruction execution apparatus, cause the instruction execution apparatus to perform the method according to any one of claims 12 to 13.

15. An apparatus configured to perform the method of any of claims 12 to 13.

## Patentansprüche

1. Bremssystem (500) für ein Fahrzeug, wobei das Bremssystem Folgendes umfasst:
einen ersten Steuerungsmechanismus (503), der von einem Benutzer bedienbar ist, um eine Fahrzeugbremse (502) zu steuern;
einen zweiten Mechanismus (501), der von einem Benutzer bedienbar ist, um einen Parkmodus des Fahrzeugs auszuwählen; und
eine Rückkopplungseinrichtung (504), die dazu ausgelegt ist, eine vom Benutzer erkennbare Wirkung auf den ersten Mechanismus als Reaktion darauf, dass der Parkmodus des Fahrzeugs über den zweiten Mechanismus ausgewählt wurde, vorzusehen.

2. Bremssystem nach Anspruch 1, wobei die Rückkopplungseinrichtung dazu ausgelegt ist, einen Widerstand zur Bewegung des ersten Mechanismus zu verändern.

3. Bremssystem nach Anspruch 1 oder 2, wobei die Rückkopplungseinrichtung dazu ausgelegt ist, eine haptische Rückkopplungseinheit zu steuern, die mit dem ersten Mechanismus gekoppelt ist, um zu bewirken, dass der erste Mechanismus vibriert.

4. Bremssystem nach Anspruch 1 oder 2, wobei der zweite Mechanismus eine Benutzereingabevorrichtung zum Empfangen einer Benutzereingabe umfasst.

5. Bremssystem nach Anspruch 1, wobei der erste Mechanismus ein bewegliches hand- oder fußbedienbares Element umfasst.

6. Bremssystem nach Anspruch 5, wobei der erste Mechanismus ein Stellglied umfasst, das dazu ausgelegt ist, das bewegliche Element zu bewegen.

7. Bremssystem nach Anspruch 5 oder Anspruch 6, wobei der erste Mechanismus ein Bremspedal (10) umfasst.

8. Bremspedal nach Anspruch 7, wobei der erste Mechanismus dazu ausgelegt ist, das Bremspedal als Reaktion darauf, dass der Parkmodus des Fahrzeugs ausgewählt wurde, nach unten zu bewegen.

9. Bremssystem nach Anspruch 1 oder 2, wobei das Vorsehen der durch den Benutzer erkennbaren Wirkung das Vorsehen einer Berührungseingabe an den ersten Mechanismus umfasst,
optional wobei das Vorsehen der durch den Benutzer erkennbaren Wirkung das Einstellen einer Berührungsreaktion des ersten Mechanismus umfasst.

10. Bremssystem nach Anspruch 1 oder 2, wobei der zweite Mechanismus einen Touchscreen umfasst.

11. Bremssystem nach Anspruch 10, wobei der zweite Mechanismus eine Steuerung umfasst, die dazu ausgelegt ist, den Touchscreen zu steuern, um eine grafische Benutzeroberfläche anzuzeigen, die eine Parkmodusauswahloption angibt,
optional wobei der zweite Mechanismus eine Einrichtung zum Eingreifen in einen Antriebsstrang des Fahrzeugs umfasst, um als Reaktion auf die Auswahl des Parkmodus eine Bewegung des Fahrzeugs zu verhindern.

12. Verfahren zum Steuern eines Bremssystems (500) für ein Fahrzeug, wobei das Verfahren Folgendes umfasst:
Bestimmen (S100), ob der Parkmodus des Fahrzeugs über einen zweiten Mechanismus (501) ausgewählt wurde, und
Vorsehen (S620) einer durch den Benutzer erkennbaren Wirkung auf einen ersten Steuerungsmechanismus (503), der dazu funktionsfähig ist, als Reaktion auf das Bestimmen, dass der Parkmodus des Fahrzeugs über den zweiten Mechanismus ausgewählt wurde, eine Bremse (502) des Fahrzeugs zu steuern.

13. Verfahren nach Anspruch 12, wobei das Vorsehen einer durch den Benutzer erkennbaren Wirkung das Verändern (S120, S220) eines Widerstands gegen Bewegung des ersten Mechanismus umfasst, oder wobei die durch den Benutzer erkennbare Wirkung eine Vibration des ersten Mechanismus umfasst.

14. Computerlesbares Speichermedium, das dazu angeordnet ist, Computerprogrammanweisungen zu speichern, die, wenn sie von einer Anweisungsausführungsvorrichtung ausgeführt werden, bewirken, dass die Anweisungsausführungsvorrichtung das Verfahren nach einem der Ansprüche 12 bis 13 durchführt.

15. Vorrichtung, die dazu ausgelegt ist, das Verfahren nach einem der Ansprüche 12 bis 13 durchzuführen.

## Revendications

1. Système de frein (500) pour un véhicule, le système de frein comprenant :
un premier mécanisme de commande (503) actionnable par un utilisateur pour commander un frein de véhicule (502) ;
un second mécanisme (501) actionnable par un utilisateur pour sélectionner un mode de stationnement du véhicule ; et
un appareil de rétroaction (504) conçu pour fournir un effet détectable par l'utilisateur au premier mécanisme en réponse à la sélection du mode de stationnement du véhicule par l'intermédiaire du second mécanisme.

2. Système de frein selon la revendication 1, l'appareil de rétroaction étant conçu pour modifier une résistance au mouvement du premier mécanisme.

3. Système de frein selon la revendication 1 ou 2, l'appareil de rétroaction étant conçu pour commander une unité de rétroaction haptique accouplée au premier mécanisme pour amener le premier mécanisme à vibrer.

4. Système de frein selon la revendication 1 ou 2, le second mécanisme comprenant un appareil d'entrée utilisateur pour recevoir une entrée utilisateur.

5. Système de frein selon la revendication 1, le premier mécanisme comprenant un élément mobile actionné à la main ou au pied.

6. Système de frein selon la revendication 5, le premier mécanisme comprenant un actionneur conçu pour déplacer l'élément mobile.

7. Système de frein selon la revendication 5 ou 6, le premier mécanisme comprenant une pédale de frein (10).

8. Système de frein selon la revendication 7, le premier mécanisme étant conçu pour déplacer la pédale de frein vers le bas en réponse à la sélection du mode de stationnement du véhicule.

9. Système de frein selon la revendication 1 ou 2, la fourniture de l'effet détectable par l'utilisateur comprenant la fourniture d'une entrée tactile au premier mécanisme,
éventuellement, la fourniture de l'effet détectable par l'utilisateur comprenant le réglage d'une réponse tactile du premier mécanisme.

10. Système de frein selon la revendication 1 ou 2, le second mécanisme comprenant un écran tactile.

11. Système de frein selon la revendication 10, le second mécanisme comprenant un dispositif de commande conçu pour commander l'écran tactile pour afficher une GUI indiquant une option de sélection de mode de stationnement,
éventuellement, le second mécanisme comprenant un moyen pour mettre en prise un groupe motopropulseur du véhicule pour empêcher le déplacement du véhicule, en réponse à la sélection du mode de stationnement.

12. Procédé de commande d'un système de frein (500) pour un véhicule, le procédé comprenant :
détermination (S100) du fait de savoir si un mode de stationnement du véhicule a été sélectionné par l'intermédiaire d'un second mécanisme (501) ; et
fourniture (S620) d'un effet détectable par l'utilisateur à un premier mécanisme de commande (503) actionnable par un utilisateur pour commander un frein (502) du véhicule en réponse à la détermination du fait que le mode de stationnement du véhicule a été sélectionné par l'intermédiaire du second mécanisme.

13. Procédé selon la revendication 12, la fourniture d'un effet détectable par l'utilisateur comprenant la modification (S120, S220) d'une résistance au mouvement du premier mécanisme, ou l'effet détectable par l'utilisateur comprenant une vibration du premier mécanisme.

14. Support de stockage lisible par ordinateur conçu pour stocker des instructions de programme informatique qui, lorsqu'elles sont exécutées par un appareil d'exécution d'instructions, amènent l'appareil d'exécution d'instructions à effectuer le procédé selon l'une quelconque des revendications 12 et 13.

15. Appareil conçu pour effectuer le procédé selon l'une quelconque des revendications 12 et 13.
